# FASCICULE DE BREVET EUROPEEN

(11) **EP 0 488 857 B1**
(45) Date de publication et mention de la délivrance du brevet: **28.12.1994**
(21) Numéro de dépôt: 91403140.6
(22) Date de dépôt: 20.11.1991
(51) Int. Cl.: F16H 61/34, F16H 63/20

(54) **Dispositif interne de commande de boîte de vitesses**
Interne Steuervorrichtung für Schaltgetriebe
Internal control device for gearbox

(30) Priorité: 30.11.1990 FR 9015062
(43) Date de publication de la demande: 03.06.1992
(73) Titulaire: AUTOMOBILES PEUGEOT, 75116 Paris (FR); AUTOMOBILES CITROEN, 92200 Neuilly-sur-Seine (FR)
(72) Inventeur: Chrétien, Philippe, F-78430 Louveciennes (FR); Rollet, Joel, F-25550 Bavans (FR); Clouard, François, F-25200 Montbeliard (FR)
(74) Mandataire: Durand, Yves Armand Louis

(56) Documents cités:
- EP-A- 0 022 632
- WO-A-90/04734
- US-A- 2 319 716
- US-A- 2 334 421

## Description

La présente invention se rapporte à un dispositif interne de commande de boîte de vitesses.

On connaît depuis longtemps des boîtes de vitesses à changement de rapports manuel, et dans lesquelles chaque fourchette de crabotage est montée coulissante de façon à pouvoir engager l'un ou l'autre de deux rapports en vis-à-vis, suivant le sens de coulissement de celle-ci. Le mouvement des fourchettes est obtenu par le déplacement d'un levier ou sélecteur de vitesses extérieur à la boîte, ce déplacement étant transmis aux fourchettes par un dispositif interne de commande.

Généralement, un dispositif de commande comprend pour chaque paire de rapports en vis-à-vis, une crosse de crabotage pouvant être actionnée par l'intermédiaire d'un doigt. Ces crosses sont de préférence agencées côte à côte et en alignement de sorte que le doigt unique puisse être déplacé au regard de l'une ou l'autre des crosses, alternativement. On comprend donc que le doigt doit pouvoir être d'une part déplacé suivant une première direction pour sélectionner la crosse de crabotage sur laquelle on désire agir, et d'autre part suivant une seconde direction pour engager l'un des deux rapports qu'il est possible de craboter à l'aide de la crosse que l'on a précédemment choisie.

Diverses solutions ont été proposées pour obtenir deux directions de déplacement du doigt. L'une de ces solutions consiste à rendre le doigt solidaire en rotation d'un arbre de sortie faisant saillie hors du carter de la boîte de vitesses, et de déplacer le doigt en translation grâce à un levier monté sur un deuxième arbre de sortie perpendiculaire au premier et agissant sur un élément de transmission solidaire du doigt. Cette solution à deux arbres de sortie pivotant sans coulisser permet une étanchéité efficace du carter, mais oblige à éloigner les endroits auxquels les arbres de sortie font saillie du carter, et donc à recourir à des leviers extérieurs de forme complexe, encombrante et de rigidité réduite.

Une autre solution également relativement complexe est décrite dans le document EP-A-0 022 632 qui décrit un dispositif de commande comprenant un carter, plusieurs crosses de crabotage montées coulissantes sur le carter pour alternativement engager chacune l'un ou l'autre des deux rapports en vis-à-vis, un arbre de transmission sur lequel est fixé un doigt, cet arbre étant d'une part monté coulissant sur le carter pour déplacer alternativement le doigt au regard de l'une des crosses, et étant d'autre part monté à rotation sur le carter de façon que le doigt puisse exercer sur la crosse choisie une poussée d'engagement de l'un ou de l'autre rapport, et un arbre de sortie monté d'une part pivotant par rapport au carter pour commander la translation axiale de l'arbre de transmission et d'autre part, coulissant sur le carter pour commander la rotation de l'arbre de transmission, les arbres de sortie et de transmission étant perpendiculaires et reliés l'un à l'autre par l'intermédiaire d'un levier dont une extrémité est fixée à l'arbre de sortie de façon à être solidaire en rotation et dont l'autre extrémité porte une rotule logée dans une ouverture d'un élément solidaire de l'arbre de transmission, cet élément s'étendant sensiblement parallèlement à l'arbre de transmission.

La présente invention a pour but de remédier aux inconvénients susmentionnés ainsi qu'à d'autres en proposant un dispositif interne de commande de boîte de vitesses simple, à encombrement réduit et qui permette en outre de limiter les jeux de fonctionnement dus à la rigidité réduite et à la forme complexe des pièces mobiles, tout en garantissant une excellente étanchéité du carter, au niveau de la sortie des arbres hors du carter.

A cet effet, l'invention a pour objet un dispositif interne de commande de boîte de vitesses du type comprenant un carter, plusieurs crosses de crabotage montées coulissantes sur le carter pour alternativement engager chacune l'un ou l'autre de deux rapports en vis-à-vis, un arbre de transmission sur lequel est fixé un doigt, cet arbre étant d'une part monté coulissant sur le carter pour déplacer alternativement le doigt au regard de l'une des crosses, et étant d'autre part monté à rotation sur le carter de façon que le doigt puisse exercer sur la crosse choisie une poussée d'engagement de l'un ou de l'autre rapport, et un arbre de sortie monté pivotant par rapport au carter et relié à l'arbre de transmission pour commander la rotation de celui-ci, les arbres de sortie et de transmission étant perpendiculaires et reliés l'un à l'autre par l'intermédiaire d'un levier dont une extrémité est fixée à l'arbre de sortie de façon à en être solidaire en rotation et dont l'autre extrémité porte une rotule montée mobile dans un élément solidaire du doigt, cet élément s'étendant sensiblement parallèlement à l'arbre de transmission (Dispositif du type divulgue dans EP-A-0 022 632), caractérisé en ce que, pour assurer l'entraînement en rotation de l'arbre de transmission, et par suite l'engagement de l'un ou de l'autre des rapports, par pivotement de l'arbre de sortie, l'élément solidaire du doigt comporte un logement définissant une voie de guidage sensiblement parallèle à l'axe de l'arbre de transmission, dans laquelle coulisse la rotule, le levier et ledit logement s'étendant dans un plan sensiblement parallèle à l'arbre de transmission.

Selon un mode de réalisation de l'invention, un arbre de sélection sensiblement parallèle à l'arbre de sortie est monté pivotant par rapport au carter et est solidaire en rotation d'un levier de sélection agissant sur le doigt de façon que le pivotement de l'arbre et du levier de sélection entraînent le coulissement du doigt avec l'arbre de transmission.

On notera ici que la disposition parallèle des arbres de sortie et de sélection permet, en plus d'atteindre les buts de l'invention expliqués ci-dessus, de simplifier les usinages à effectuer sur le carter pour sa réalisation.

Selon un mode de réalisation de l'invention, un moyen de blocage à billes est disposé entre le levier fixé à l'arbre de sortie et le carter de manière à immobiliser le doigt dans l'une de ses positions de point mort ou de rapports engagés.

On remarquera ici que selon un premier mode de réalisation, la rotule est constituée par un galet de forme sphérique qui est monté pivotant sur le levier et dont la surface sphérique est logée entre deux bras parallèles d'une fourche formée par l'élément de façon à permettre un roulement ponctuel du galet contre l'un des bras lorsque le doigt et l'arbre de transmission coulissent.

Suivant un second mode de réalisation, l'élément comporte une rainure longitudinale dans laquelle un patin est monté coulissant, ce patin étant monté sur la rotule du levier.

Le patin est réalisé dans un matériau à faible coefficient de frottement.

Mais d'autres avantages et caractéristiques de l'invention ressortiront mieux de la description détaillée qui suit et se réfère aux dessins annexés donnés uniquement à titre d'exemple et dans lesquels.

La figure 1 est une vue partielle et en perspective d'un premier mode de réalisation du dispositif interne de commande de boîte de vitesses conforme à la présente invention.

La figure 2 est une vue en coupe partielle suivant le plan vertical passant par les axes A-A′ et B-B′ de la figure 1.

La figure 3 est une vue suivant la flèche C de la figure 1, qui représente une partie du dispositif en pointillés dans une première position de crabotage, et en trait fort dans une seconde position de crabotage.

La figure 4 est une vue partielle et en coupe suivant la ligne D-D′ de la figure 1.

La figure 5 est une vue en coupe partielle similaire à la figure 2 et représentant un second mode de réalisation de l'invention.

La figure 6 est une vue en coupe suivant la ligne E-E′ de la figure 5.

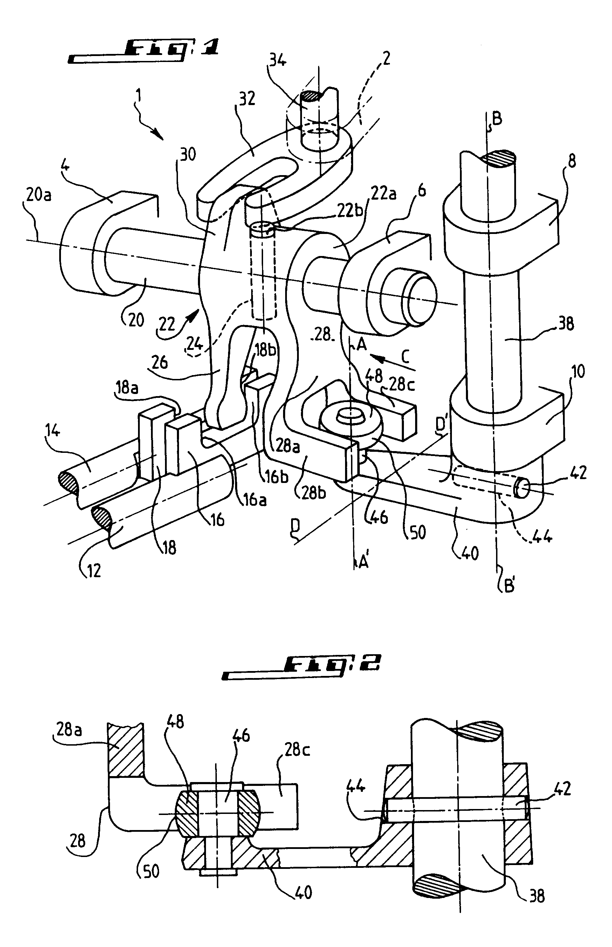

En se reportant à la figure 1, on voit un dispositif interne de commande 1 pour une boîte de vitesses dont le carter 3 est représenté ici par des paliers de support 2, 4, 6, 8 et 10, qui sont par exemple formés sur une plaque-support fixée au carter.

Généralement, ces dispositifs sont actionnés à l'aide d'un levier ou sélecteur de vitesses (non représenté) qui est situé hors du carter 3, et qui est raccordé au dispositif par intermédiaire de tringles, de câbles ou autres.

Sur cette figure, on voit deux arbres parallèles 12, 14, sur chacun desquels est fixée une crosse de crabotage 16, 18. Ces crosses 16 et 18 possèdent chacune un renfoncement central avec respectivement deux surfaces d'appui 16a, 16b et 18a, 18b. Les surfaces d'appui de chaque crosse 16, 18 s'étendent au regard l'une de l'autre, respectivement dans un plan perpendiculaire à l'axe longitudinal de leur arbre de support 12, 14. Chaque arbre 12, 14 est monté axialement coulissant sur le carter 3 et supporte une fourchette de crabotage (non représentée) qui permet, suivant le sens de coulissement des arbres 12, 14 et des crosses 16, 18, d'engager l'un ou l'autre de deux rapports placés en vis-à-vis.

De préférence, les arbres coulissent dans une direction parallèle aux lignes de pignons commandés et de façon que dans une position neutre - c'est-à-dire au point mort de la boîte de vitesses - les crosses soient disposées côte à côte et en alignement. Dans cette position telle que représentée sur la figure 1, les surfaces d'appui des crosses de crabotage forment un couloir dans lequel un doigt de commande 26 qui sera décrit plus tard peut être déplacé.

Outre les crosses de crabotage 16 et 18, le dispositif 1 comprend un arbre 20 dit de transmission, qui s'étend sensiblement à angle droit par rapport aux arbres 12 et 14. L'arbre de transmission 20 est monté axialement coulissant et libre en rotation dans les paliers de support 4 et 6 du carter 3. Ainsi, l'arbre de transmission 20 peut non seulement pivoter autour de son axe longitudinal 20a mais également coulisser par rapport aux paliers 4 et 6 suivant la direction de cet axe 20a.

Un élément de transmission 22 est monté fixe sur l'arbre 20. Plus précisément, l'élément 22 comporte une partie en forme de moyeu cylindrique 22a qui est emmanché sur l'arbre 20. Un perçage radial 24 est usiné de façon débouchante dans le moyeu 22a et dans l'arbre 20, de façon à permettre l'engagement à force d'une goupille 22b. Grâce à ce montage, l'élément 22 est fixé à l'arbre 20, de façon à tourner et à coulisser avec celui-ci.

Dans un mode de réalisation de l'invention, l'élément de transmission 22 comporte, outre sa partie en forme de moyeu 22a, plusieurs parties en saillie qui vont être décrites maintenant.

L'élément 22 présente à sa partie située en face de crosses de crabotage 16, 18 le doigt 26 permettant le déplacement des arbres 12 et 14. Ce doigt 26 est intégré au moyeu 22a et fait saillie de l'élément 22, avec son extrémité libre s'étendant au regard d'une part des surfaces d'appui 16a ou 18a et d'autre part des surfaces d'appui 16b ou 18b. On comprend déjà que si l'élément de transmission 22 est entraîné en rotation autour de son axe 20a, selon son sens de rotation, le doigt 26 viendra exercer sur l'une des surfaces 16a, 18a ou 16b, 18b une pression permettant d'engager ou craboter l'un des rapports de la boîte de vitesses. Par ailleurs, le coulissement de l'arbre 20 et de l'élément 22 dans les paliers 4 et 6 permet de déplacer le doigt 26 au regard de l'une ou de l'autre de crosses 16 et 18, c'est-à-dire de sélectionner sa position le long du couloir de circulation expliqué plus haut.

Une fourche 28 fait également saillie de la partie du moyeu 22a qui est située en face des crosses 16 et 18. Cette fourche 28 est notamment constituée par une branche centrale 28a qui s'étend sensiblement parallèlement au doigt 26 depuis l'extrémité longitudinale de l'élément 22 qui est opposé à ce doigt. A l'extrémité libre de la 2 branche centrale 28a sont formés deux bras parallèles 28b et 28c qui forment conjointement la fourche 28 proprement dite. On comprend donc que les bras ou branches 28b et 28c sont solidaires en rotation et à coulissement de l'élément 22 et par conséquent du doigt 26. On voit bien sur la figure 1 que les branches 28b et 28c s'étendent sensiblement parallèlement à l'axe longitudinal 20a et suivant un plan perpendiculaire à l'un des rayons de l'arbre de transmission 20. Les bras parallèles 28b et 28c définissent conjointement une voie de guidage généralement parallèle à l'axe longitudinal 20a de l'arbre de transmission 20, et mobile en rotation avec l'élément 22.

Par ailleurs, l'élément 22 comporte une extension radiale en forme de came 30 qui est située à l'opposé du doigt 26 par rapport à l'axe 20a. En d'autres termes, la came 30 s'étend depuis la partie du moyeu 22a qui est diamétralement opposée au doigt 26. Cette came 30 possède deux surfaces parallèles qui sont respectivement formées suivant un plan normal à l'axe longitudinal 20a. Ces surfaces parallèles de la came 30 sont disposées entre deux branches d'un levier de sélection 32 ayant la forme d'une fourche. La fourche de sélection 32 est fixée sur un arbre vertical 34 qui est monté pivotant dans un palier de support 2 formé dans le carter 3. Bien que ceci ne soit visible sur les figures, l'arbre vertical 34 dit de sélection fait saillie hors du carter 3 pour permettre le raccordement en sortie du dispositif 1 au levier ou sélecteur vitesses. La fourche de sélection 32 est fixée à l'extrémité de l'arbre 34 de façon à pivoter dans un plan sensiblement parallèle à l'axe 20a. On comprend donc que la rotation de la fourche 32 avec l'arbre de sélection 34 permet d'appliquer un effort à l'élément de transmission 22 de façon à déplacer par coulissement le doigt 26, suivant la direction de l'axe 20a. Suivant que la fourche de sélection 32 exerce un effort sur l'une ou sur l'autre desdites surfaces parallèles de la came 30, l'ensemble formé par l'arbre 20, l'élément 22 et le doigt 26 coulisse dans l'un ou l'autre des sens possibles suivant la direction de l'axe 20a.

A droite sur la figure 1, on voit un arbre de sortie 38 qui est monté parallèlement à l'arbre de sélection 34 sur les paliers de support 8 et 10 du carter 3, de manière à pivoter autour de son axe longitudinal B-B′. Bien que ceci ne soit pas visible, l'extrémité de cet arbre 38 qui est la plus proche du palier 8 fait saillie hors du carter 3 pour permettre le raccordement en sortie de cet arbre au levier ou sélecteur de vitesses.

Puisque les arbres 34 et 38 sont parallèles et sont montés pivotants par rapport au carter 3, ceux-ci peuvent faire saillie hors du carter à proximité l'un de l'autre. Ainsi, les usinages à effectuer dans le carter sont simplifiés et l'étanchéité des passages de ces arbres hors du carter est aisée à réaliser.

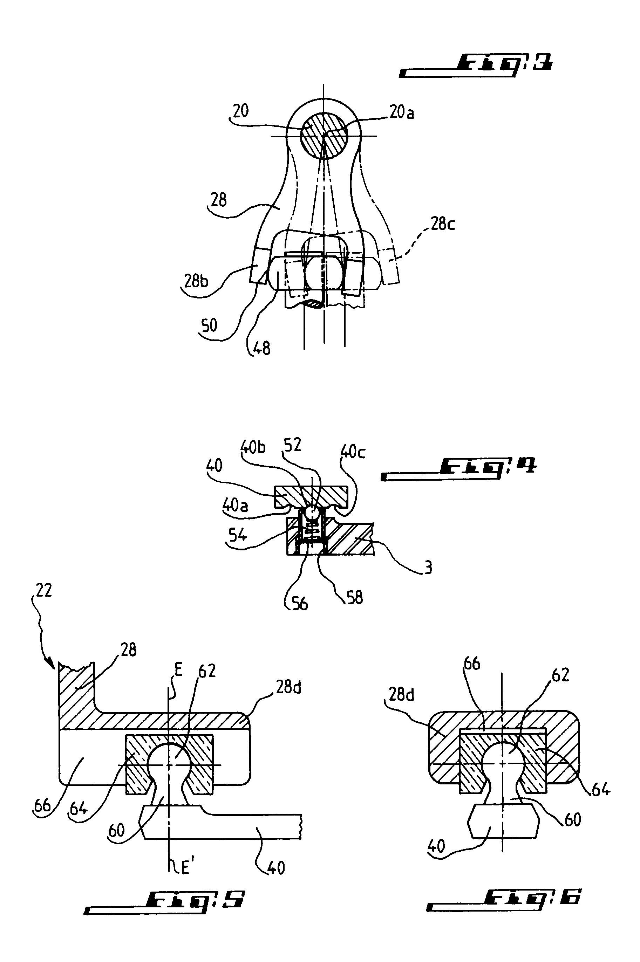

Un levier 40 est monté à l'autre extrémité de l'arbre de sortie 38. Ce levier 40 est fixé à l'arbre 38 de façon à en être solidaire en rotation, à l'aide d'une goupille 42 qui est engagée à force dans un perçage débouchant 44 formé radialement dans le levier 40 et dans l'arbre 38. Comme on le voit bien sur la figure 2 par exemple, le levier 40 s'étend dans un plan sensiblement perpendiculaire à l'axe B-B′, depuis l'arbre 38 jusqu'en dessous de la fourche 28. On remarquera ici que la fourche 28 et le levier 40 sont sensiblement parallèles.

A l'extrémité du levier 40 qui est opposée à l'arbre 38, est prévue une rotule montée coulissante entre les bras de la fourche 28.

Suivant le mode réalisation visible sur les figures 1 à 3, cette rotule coulissante est constituée par un galet 48 avec une surface de roulement 50 ayant une forme sphérique. Le galet 48 fait saillie entre les bras parallèles de la fourche 28 et est monté pivotant sur un axe 46 sensiblement parallèle à l'axe B-B′ décrit plus haut.

Le renvoi du mouvement de rotation entre les deux arbres perpendiculaires 38 et 20 est rendu possible par la liaison rotulante entre le galet 48 et la fourche 28. En effet lors du pivotement du levier 40, la surface sphérique 50 peut glisser sur la branche avec laquelle elle est contact de façon que le point d'application de la pression exercée par le galet 48 se déplace, à partir de la position médiane de point mort, en s'éloignant de l'axe 20a et de la branche 28a.

En se reportant à la figure 3, on comprend que le galet 48 qui est monté avec jeu entre les bras 28b et 28c, permet un contact ponctuel entre sa surface sphérique de roulement 50 et l'un ou l'autre de ces bras. De cette façon, lorsque l'arbre de sortie 38 et le levier 40 sont entraînés en rotation, ce contact glisse par rapport à la fourche 28 de sorte que l'élément 22 peut librement pivoter pour provoquer le déplacement du doigt 26 dans un plan perpendiculaire à l'axe 20a.

On a représenté sur la figure 3, deux positions extrêmes de pivotement du doigt 26. La position représentée en trait fort correspond à une position de rapport d'engagement dans laquelle le doigt 26 a exercé sur l'une des surfaces d'appui 16a ou 18a un effort apte à déplacer l'arbre correspondant 12 ou 14 pour craboter l'un des rapports en vis-à-vis. L'autre position représentée en pointillé correspond à un état du dispositif 1 dans lequel le doigt 26 a exercé sur l'une des surfaces 16b ou 18b un effort permettant d'engager le rapport opposé.

Tandis que l'arbre de sortie 38 permet, selon son sens de rotation, l'engagement de l'un ou de l'autre de ces rapports, l'arbre 34 permet de sélectionner la crosse sur laquelle l'on souhaite agir - c'est-à-dire permet la sélection d'une paire de rapports en vis-à-vis - avec coulissement du galet 48 entre les bras de la fourche 28. Ce mouvement de coulissement est rendu possible par le roulement de galet 48 contre l'un des bras 28b, 28c, de sorte que l'élément de transmission 22 peut aisément être déplacé suivant l'axe 20a lorsque l'arbre de sélection 34 est actionné.

On a illustré sur la figure 4, un moyen de blocage en rotation du levier 40 qui permet d'immobiliser le doigt 26 dans l'une des positions décrites plus haut de rapports engagés ou de point de mort. Ce moyen de blocage est constitué par un verrou à billes logé dans un perçage 58 de la partie du carter 3 qui se trouve au regard de la face inférieure du levier 40. Ce verrou à billes comprend une douille 56 qui est fixée, par exemple par emmanchement à force, dans le perçage 58 et dans laquelle est logé un ressort hélicoïdal 54. Une bille 52 est montée entre un épaulement prévu à l'extrémité de la douille qui est disposée au regard du levier 40 et le ressort 54. Ainsi, la bille 52 est sollicitée à l'encontre de la face inférieure du levier 40 dans laquelle sont formés trois renfoncements sensiblement hémisphériques et désignés en 40a, 40b et 40c. Les trois renfoncements 40a, 40b et 40c sont usinés suivant un arc de cercle centré sur l'axe B-B et de manière à venir alternativement au droit de la bille 52 lorsque le levier 40 pivote avec l'arbre de sortie 38. La bille 52 peut alors venir se loger dans l'un de ces renfoncements pour bloquer le levier 40 et pour, par conséquent, immobiliser en rotation l'élément 22 et le doigt 26. Selon l'exemple illustré, les renfoncements 40a et 40c verrouillent le levier 40 dans les positions de rapports engagés correspondant aux états de la fourche 28 représentés respectivement en trait fort et en trait pointillés sur la figure 3. Le renfoncement 40b permet quant à lui de verrouiller le levier 40 dans la position de point mort du dispositif 1 visible par exemple sur la figure 1. Il va de soi que le verrouillage du levier 40 à l'aide du moyen de blocage qui vient d'être décrit ne s'oppose pas au coulissement du doigt 26 selon la direction de l'axe longitudinal 20a.

On donc obtenu conformément à l'invention un dispositif interne de commande ayant une structure simple, compacte et rigide, et grâce à laquelle il est aisé d'assurer une excellente étanchéité au niveau des passages d'arbres de sélection et de sortie hors du carter de la boîte. En outre, le dispositif selon l'invention permet une commande précise et douce de la boîte de vitesses puisque le mouvement de sélection et le mouvement d'engagement des rapports est effectué à l'aide des arbres pivotants 34 et 38, respectivement.

On a illustré sur les figures 5 et 6 un deuxième mode de réalisation de la présente invention. Le dispositif décrit en se reportant à ces figures est généralement identique à celui décrit précédemment. Par conséquent, les pièces ou éléments similaires dans les deux modes de réalisation seront désignés par les mêmes références numériques et n'ont pas à être décrits à nouveau.

Le dispositif conforme à ce deuxième mode de réalisation diffère du premier en ce que le mouvement de rotation de l'arbre 38 permettant la mise en prise ou au point mort de la boîte est transmis à l'élément 22 par l'intermédiaire d'un patin coulissant 64. Le patin 64 comporte un logement sphérique qui débouche au regard du levier 40. Une rotule 60 est montée dans le logement sphérique du patin 64 et est fixée par son extrémité opposée sur le levier 40. L'élément 22 comporte une fourche 28 dont une partie extrême 28d s'étend de façon similaire aux branches 28b et 28c décrites plus haut, suivant une direction parallèle à celle de l'axe longitudinal 20a. A la partie extrême 28d de la fourche 28 qui est au regard du levier 40 est formée une rainure longitudinale 66. Comme visible sur la figure 6, la rainure longitudinale 66 possède une section transversale rectangulaire correspondant à celle du patin 64. Le patin 64 est monté avec jeu dans la rainure 66 et est de préférence réalisé dans un matériau à faible coefficient de frottement. On a ainsi obtenu d'une part une liaison rotulante entre le levier et l'élément 22 pour permettre une rotation douce et aisée de l'arbre de transmission 20, et d'autre part un montage coulissant du patin 64 dans la rainure 66 de manière à limiter les frottements s'opposant au déplacement de l'élément 22 suivant l'axe 20a lors du mouvement de sélection engendré par le pivotement de l'axe 34.

Le dispositif conforme à ce deuxième mode de réalisation garantit à la fois un excellent guidage du patin coulissant 64 et, grâce à la rotule 60, un pivotement aisé de l'élément de transmission 22 et du doigt de commande 26.

Bien entendu, l'invention n'est nullement limitée aux modes de réalisation décrits et illustrés qui n'ont été donnés qu'à titre d'exemple, du moment qu'elle reste définie par les revendications.

## Revendications

1. Dispositif interne de commande de boîte de vitesses du type comprenant un carter (3), plusieurs crosses de crabotage (16, 18) montées coulissantes sur le carter (3) pour alternativement engager chacune l'un ou l'autre de deux rapports en vis-à-vis, un arbre de transmission (20) sur lequel est fixé un doigt (26), cet arbre étant d'une part monté coulissant sur le carter (3) pour déplacer alternativement le doigt (26) au regard de l'une des crosses (16, 18), et étant d'autre part monté à rotation sur le carter (3) de façon que le doigt (26) puisse exercer sur la crosse choisie une poussée d'engagement de l'un ou de l'autre rapport, et un arbre de sortie (38) monté pivotant par rapport au carter (3) et relié à l'arbre de transmission (20) pour commander la rotation de celui-ci, les arbres de sortie (38) et de transmission (20) étant perpendiculaires et reliés l'un à l'autre par l'intermédiaire d'un levier (40) dont une extrémité est fixée à l'arbre de sortie (38) de façon à en être solidaire en rotation et dont l'autre extrémité porte une rotule (48, 60) montée mobile dans un élément (28) solidaire du doigt (26), cet élément (28) s'étendant sensiblement parallèlement à l'arbre de transmission (20), caractérisé en ce que pour assurer l'entraînement en rotation de l'arbre de transmission (20), et par suite l'engagement de l'un des rapports, par pivotement de l'arbre de sortie (38), l'élément (28) solidaire du doigt (26) comporte un logement (66) définissant une voie de guidage sensiblement parallèle à l'axe (20a) de l'arbre de transmission (20), dans laquelle coulisse la rotule (48, 60), le levier (40) et ledit logement (66) s'étendant dans un plan sensiblement parallèle à l'arbre de transmission (20).

2. Dispositif selon la revendication 1, caractérisé en ce qu'un arbre de sélection (34) sensiblement parallèle à l'arbre de sortie (38) est monté pivotant par rapport au carter (3) et est solidaire en rotation d'un levier de sélection (32) agissant sur le doigt (26) de façon que le pivotement de l'arbre (34) et du levier de sélection (32) entraînent le coulissement du doigt (26) avec l'arbre de transmission (20).

3. Dispositif selon la revendication 1 ou 2, caractérisé en ce qu'un moyen de blocage à billes est disposé entre le levier (40) fixé à l'arbre de sortie et le carter (3) de manière à immobiliser le doigt (26) dans l'une de ses positions de point mort ou de rapports engagés.

4. Dispositif selon l'une des revendications 1 à 3, caractérisé en ce que la rotule est constituée par un galet (48) de forme sphérique (50) qui est monté pivotant sur le levier (40) et dont la surface sphérique (50) est logée entre deux bras parallèles (28b, 28c) d'une fourche formée par l'élément (28) de façon à permettre un roulement ponctuel du galet (48) contre l'un des bras lorsque le doigt (26) et l'arbre de transmission (20) coulissent.

5. Dispositif selon l'une des revendications 1 à 3, caractérisé en ce que l'élément (28) comporte une rainure longitudinale (66) dans laquelle un patin (64) est monté coulissant, ce patin (64) étant monté sur la rotule (60) du levier (40).

6. Dispositif selon la revendication 5, caractérisé en ce que le patin (64) est réalisé dans un matériau à faible coefficient de frottement.

## Claims

1. Internal device for the control of a change speed gearbox of the type comprising a casing (3), several dog shifting cross-heads (16, 18) slidably mounted onto the casing (3) to each one reciprocally engage the one or the other one of two confronting speed gear ratios, a transmission shaft (20) onto which is fastened a finger (26), this shaft being on the one hand slidably mounted onto the casing (3) to alternately displace the finger (26) registering with one of the cross-heads (16, 18) and being on the other hand mounted for rotation onto the casing (3) so that the finger (26) may exert upon the selected cross-head a thrust for engaging one or the other one speed gear ratio, and an output shaft (38) pivotally mounted with respect to the casing (3) and connected to the transmission shaft (20) for operating the rotation of the latter, the output and transmission shafts (38) and (20) being perpendicular and connected to each other through the medium of a lever (40) one end of which is fastened to the output shaft (38) so as to be made fast for rotation and the other end of which carries a ball-head (48, 60) movably mounted in an element (28) made fast to the finger (26), this element (28) extending in substantially parallel relation to the transmission shaft (20), characterized in that for providing the rotary drive of the transmission shaft (20) and therefore the engagement of one of the speed gear ratios through pivoting of the output shaft (38), the element (28) made fast to the finger (26) comprises a recess (66) defining a guide-way substantially parallel to the axis (20a) of the transmission shaft (20), in which is sliding the ball-head (48, 60), the lever (40) and the said recess (66) extending in a plane substantially parallel to the transmission shaft (20).

2. Device according to claim 1, characterized in that a selection shaft (34) substantially parallel to the output shaft (38) is pivotally mounted with respect to the casing (3) and is made fast for rotation to a selecting lever (32) acting upon the finger (26) so that the pivoting of the selection shaft (34) and lever (32) entail the sliding of the finger (26) together with the transmission shaft (20).

3. Device according to claim 1 or 2, characterized in that a ball locking means is arranged between the lever (40) fastened to the output shaft and the casing (3) so as to hold the finger (26) against motion in one of its neutral or engaged speed gear ratios positions.

4. Device according to one of claims 1 to 3, characterized in that the ball-head is constituted by a roller (48) of spherical shape (50) which is pivotally mounted onto the lever (40) and the spherical surface (50) of which is fitted between two parallel arms (28b, 28c) of a fork formed by the element (28) so as to permit a pinpoint rolling of the roller (48) against one of the arms when the finger (26) and the transmission shaft (20) are sliding.

5. Device according to one of claims 1 to 3, characterized in that the element (28) comprises a longitudinal groove (66) into which a slide pad (64) is slidably mounted, this pad (64) being mounted onto the ball-head (60) of the lever (40).

6. Device according to claim 5, characterized in that the pad (64) is made from a material with a small coefficient of friction.

## Patentansprüche

1. Innere Vorrichtung zur Steuerung eines Schaltgetriebes, derjenigen Gattung, mit einem Gehäuse (3), mehreren an dem Gehäuse (3) gleitbar angeordneten Klauenkupplungskreuzköpfen (16, 18), um abwechselnd jeweils den einen oder den anderen von zwei gegenüberliegenden Gängen einzuschalten, einer Übertragungswelle (20) an welcher ein Finger (26) befestigt ist, wobei diese Welle einerseits an dem Gehäuse (3) gleitbar angeordnet ist, um den Finger (26) im Hinblick auf den einen der Kreuzköpfe (16, 18) hin und her zu bewegen, und wobei sie andererseits an dem Gehäuse (3) drehbar angeordnet ist, damit der Finger (26) einen Schub zum Einrücken des einen oder des anderen Ganges auf den gewählten Kreuzkopf ausüben kann, und einer in bezug auf das Gehäuse (3) schwenkbar angeordneten und mit der Übertragungswelle (20) zum Drehantrieb derselben verbundenen Ausgangswelle (38), wobei die Ausgangswelle (38) und die Übertragungswelle (20) senkrecht zueinander sind und miteinander über einen Hebel (40) verbunden sind, dessen eines Ende an der Ausgangswelle (38) befestigt ist, um mit dieser drehfest zu sein und dessen anderes Ende einen in einem mit dem Finger (26) fest verbundenen Element (28) bewegbar angeordneten Kugelkopf (48, 60) trägt, wobei dieses Element (28) sich etwa parallel zur Übertragungswelle (20) erstreckt, dadurch gekennzeichnet, dass, um den Drehantrieb der Übertragungswelle (20) und demzufolge das Einschalten einer der Gänge durch Drehung der Ausgangswelle (38) zu gewährleisten, das mit dem Finger (26) fest verbundene Element (28) eine einen etwa parallel zu der Achse (20a) der Übertragungswelle (20) verlaufenden Führungsweg abgrenzende Ausnehmung (66) aufweist, in welchem der Kugelkopf (48, 60) gleitet, wobei der Hebel (40) und die besagte Ausnehmung (66) sich in einer zu der Übertragungswelle (20) etwa parallelen Ebene erstrecken.

2. Vorrichtung nach Anspruch 1, dadurch gekennzeichnet, dass eine zur Ausgangswelle (38) etwa parallele Auswahlwelle (34) in bezug auf das Gehäuse (3) schwenkbar angeordnet ist und mit einem auf den Finger (26) einwirkenden Auswahlhebel (32) drehfest verbunden ist, so dass das Verschwenken der Auswahlwelle (34) und des Auswahlhebels (32) die Gleitverschiebung (26) zusammen mit der Übertragungswelle (20) zur Folge hat.

3. Vorrichtung nach Anspruch 1 oder 2, dadurch gekennzeichnet, dass ein Sperrmittel mit Kugeln zwischen dem an der Ausgangswelle befestigten Hebel (40) und dem Gehäuse (3) angeordnet ist, um den Finger (26) in seiner Leerlaufstellung oder in einer seiner Gangschaltungsstellungen festzuhalten.

4. Vorrichtung nach einem der Ansprüche 1 bis 3, dadurch gekennzeichnet, dass der Kugelkopf durch eine Rolle (48) kugelförmiger Gestalt (50) gebildet ist, der drehbar an dem Hebel (40) angeordnet ist und dessen kugelförmige Fläche (50) zwischen zwei parallelen Armen (28b, 28c) einer durch das Element (28) gebildeten Gabel eingesetzt ist, um ein punktförmiges Abwälzen der Rolle (48) an einem der Arme zu gestatten, wenn der Finger (26) und die Übertragungswelle (20) sich gleitend verschieben.

5. Vorrichtung nach einem der Ansprüche 1 bis 3, dadurch gekennzeichnet, dass das Element (28) eine Längsnut (66) aufweist, in welcher ein Gleitschuh (64) gleitbar angeordnet ist, wobei dieser Gleitschuh (64) an dem Kugelkopf (60) des Hebels (40) angeordnet ist.

6. Vorrichtung nach Anspruch 5, dadurch gekennzeichnet, dass der Gleitschuh (64) aus einem Werkstoff mit schwachem Reibungskoeffizient hergestellt wird.
